# EUROPEAN PATENT APPLICATION

(11) **EP 3 293 568 A1**
(43) Date of publication of application: **14.03.2018**
(21) Application number: 16188043.0
(22) Date of filing: 09.09.2016
(51) Int. Cl.: G02F 1/1333

(54) **DISPLAY DEVICE HAVING DETACHABLE LAYER AND METHOD FOR MANUFACTURING THE SAME**

(71) Applicant: Kim, Young Su, Suwon-si, Gyeonggi-do 16433 (KR)
(72) Inventor: Kim, Young Su, Suwon-si, Gyeonggi-do 16433 (KR)
(74) Representative: Groth & Co. KB

(57) **Abstract**

The present invention provides a display device having a detachable layer and a method for manufacturing the same that provide a simple manufacturing process, a low manufacturing cost, and various designs. The display device includes: a window structure (60) having a detachable layer (40) formed on the front surface of a touch screen (20) formed unitarily with a window (30), the detachable layer having the adhesion strength in the range of 0.1 to 500 gf/25mm; and a display (10) from which the detachable layer of the window structure is entirely detachable, wherein the display has an adhesion reduction layer (70) formed thereon to reduce the adhesion force to the detachable layer formed on the front surface of the touch screen. The method includes a step of attaching the detachble layer layer to the display after removing a release film to expose the detachable layer.

## Description

### BACKGROUND OF THE INVENTION

### Field of the Invention

The present invention relates to a display device and a method for manufacturing the same, and more particularly, to a display device having window structure with a touch screen detachably attached thereto and a method for manufacturing the same.

### Background of the Related Art

A display device forms a screen through a display like a liquid crystal display LCD, an organic light-emitting diode OLED, and an electronic paper display EPD. The display device is applied to all kinds of video screen devices. On the other hand, the display device is provided with a touch screen so as to improve the conveniences in manipulation. Further, a window, which is made of tempered glass or transparent polymer resin, is disposed on the front surface of the touch screen. The window is divided into a display portion and a bezel portion along which edges are printed, thereby protecting the display device from the damages caused by external impacts or contacts. The window is attached fixedly to the touch screen by means of an OCA (Optical Clear Adhesive) or ultraviolet curing adhesive. Recently, a flexible and bent display has been introduced so that a window corresponding to the display appears.

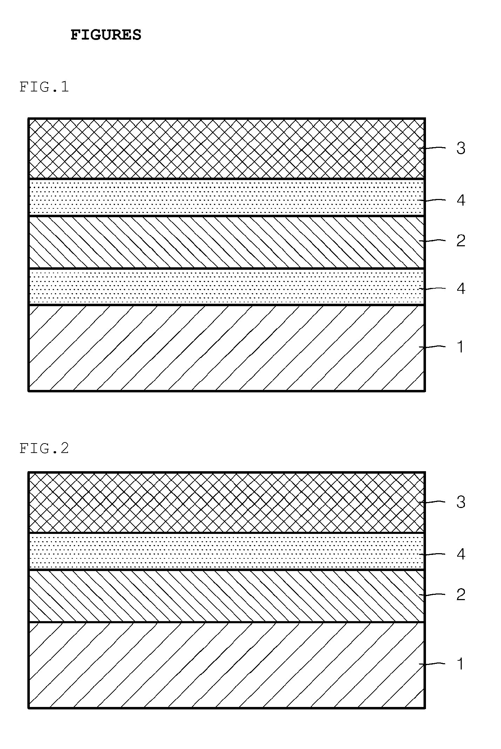

FIGS.1 and 2 are schematic sectional views showing representative examples of conventional display devices in which touch screens are adopted. At this time, the display devices include bent devices as well as flat devices as shown.

As shown in FIGS.1 and 2, the conventional display devices are configured wherein a touch screen 2 and a window 3 are laminated sequentially on a display 1 like an LCD or OLED. An adhesive layer 4 is formed on both of the space between the display 1 and the touch screen 2 and the space between the touch screen 2 and the window 3 (See FIG.1). Otherwise, as shown in FIG.2, the touch screen 2 and the window 3 are attached to each other by means of the adhesive layer 4. The display device as shown in FIG.2 has a conductive pattern (not shown) of the touch screen 2 formed on the display 1. The conventional window 3 has a high hardness, and among the whole parts of the display device, the window 3 has a relatively high price.

An adhesion process with no air bubbles is needed in manufacturing the conventional display devices. If there are no air bubbles, a refraction ratio and a reflection ratio are minimized, thereby improving the luminance of the display device. A process for removing the air bubbles becomes complicated by means of the adhesive layer 4. In more detail, the adhesive layer 4 is formed uniformly by means of injection, and next, air bubbles are removed from the adhesive layer 4 by means of close contact and pressure reduction. After that, the adhesive layer 4 is cured through ultraviolet rays. The adhesive layer 4 has to have no air bubbles, and accordingly, the formation of the adhesive layer 4 is conducted very precisely. Therefore, the conventional display devices are manufactured with relatively high-priced manufacturing equipment, thereby raising the manufacturing cost thereof. Furthermore, adhesion with air bubbles often occurs in the conventional display devices, thereby also raising a failure rate.

The conventional display devices do not satisfy the consumer's desires to obtain various and excellent designs in shapes, colors and patterns. A variety of products, complicated manufacturing process, and high manufacturing cost become obstacles to the satisfaction of the consumer's desires. Further, if the display device is manufactured with various designs, after services for the respective designs should be conducted one by one by the manufacturing company of the display device. In conventional practices, accordingly, the window 3 is designed only with a single color like black and white.

### SUMMARY OF THE INVENTION

Accordingly, it is an object of the present invention to provide to a display device having a detachable layer and a method for manufacturing the same that provide a simple manufacturing process, a low manufacturing cost, and various designs.

A display device having a detachable layer in order to accomplish the objects of the prevent invention comprises a window structure formed on the front surface of a touch screen formed unitarily with a window, the detachable layer having the adhesion strength in the range of 0.1 to 500 gf/25mm; and a display from which the detachable layer of the window structure is entirely detachable.

According to the first aspect of the present invention, desirably, the window is any one selected from a glass substrate and a plastic substrate. In more detail, the window is any one selected from a tempered glass substrate and a plastic substrate having any one or more selected from the group consisting of PET (polyethylene terephthalate), PEN (polyethylene naphthalate), PES (polyether sulfone), PI (polyimide), PAR (polyarylate), PC (polycarbonate), PMMA (polymethyl methacrylate), and COC (cycloolefin copolymer).

According to the first aspect of the present invention, desirably, the detachable layer is any one selected from an adhesive made by mixing thermosetting resin or ultraviolet curing resin as acrylic polymer, silicone polymer, or urethane polymer with a cross-linking agent, a mixture thereof, and a copolymer thereof. The detachable layer is a single layer or multiple layers having different materials from each other.

According to the first aspect of the present invention, desirably, the adhesion reduction layer is coated with a fluorocarbon resin or silicone resin by means of a wet or dry process. Further, the adhesion reduction layer is formed with a vacuum deposition layer made of titania TiO₂ or silica SiO₂ and a fluorocarbon resin or silicone resin coated on the vacuum deposition layer.

According to the first aspect of the present invention, desirably, through the formation of the adhesion reduction layer, the window structure has the adhesion strength, desirably, in the range of 0.5 to 500 gf/25mm, and more desirably, in the range of 1 to 100 gf/25mm. Further, the window structure is designed diversely in shape, color and pattern.

To accomplish the above-mentioned object, according to a second aspect of the present invention, there is provided a method for manufacturing a display device, the method including the steps of: removing a release film from a window structure having a detachable layer formed on the front surface of one side of the window, the detachable layer having the adhesion strength in the range of 0.1 to 500 gf/25mm, exposing the detachable layer to the outside; and attaching the exposed detachable layer to the display.

According to the second aspect of the present invention, desirably, the method further includes the step of separating a damaged window structure attached to the display, before preparing the window structure. An adhesion reduction layer can be formed on the display, at this stage, the detachable layer is detachably attached to the adhesion reduction layer. The window structure is attached in a manual operation, and the window structure is attached with no air bubbles.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG.1 is a schematic sectional view showing a conventional display device in which a touch screen is adopted;
FIG.2 is a schematic sectional view showing another conventional display device in which a touch screen is adopted;
FIG.3 is a schematic sectional view showing a first display device of the present invention;
FIG.4 is a schematic sectional view showing a second display device of the present invention;
FIG.5 is a schematic sectional view showing a third display device of the present invention; and
FIG.6 is a schematic view showing the outer appearances of the display devices according to the embodiments of the present invention.

### DETAILED DESCRIPTION OF THE PREFERRED EMBODIMENTS

Hereinafter, an explanation on a display device according to preferred embodiments of the present invention will be in detail given with reference to the attached drawing. Before the present invention is disclosed and described, it is to be understood that the disclosed embodiments are merely exemplary of the invention, which can be embodied in various forms. Therefore, the embodiments disclosed herein are provided to allow the present invention to be more perfectly appreciated by the person skilled in the art. In the description, the thicknesses of the films (layers or patterns) and the areas shown in the drawing may be magnified for the clarity and convenience of the description. Further, when it is said that one film (layer or pattern) is described as being disposed "on", "above", "under", or "on one surface" of the other film (layer or pattern), one film may be formed directly on the other film (layer or pattern), and otherwise, another film (layer or pattern) may be present between the two films.

Embodiments of the present invention provide a display device and a manufacturing method of being attached detachably, by applying a window structure with a detachable layer having the adhesion strength in the range of 0.1 to 500 gf/25mm to the display, so that it can provide a simple manufacturing process and a low manufacturing cost. At this time, the window structure has the detachable layer detachably attached to the display. Accordingly, an attachment target device to which the detachable layer is detachably attached is the display. The detachable layer in this invention is clearly different from the existing window protection films that are detachably attached to the windows.

According to the present invention, the detachable layer is limited as detachable from the touch screen or the display, which is clearly different from a window protection film detachably attached to the window in conventional practices. That is, if the display device according to the present invention includes the display, without having the window or the touch screen, it is not a display device completely finished. The display device according to the present invention becomes the completely finished product when the window or touch screen adopted in the present invention is attached thereto. By the way, the conventional window protection film is attached to the top of the window, and accordingly, it is just attached to the display device already finished. The window or touch screen adopted in the present invention is a necessary component constituting the display device according to the present invention, but the conventional window protection film is an auxiliary component applied selectively to the display device.

The display device according to the present invention includes all video processing devices such as mobile devices, information processing terminals, televisions, and so on. The mobile devices include cellular phones, smart phones, tablets, and so on, and the information processing terminals include ATMs, kiosks, and so on. The display of the display device may be flat or bent, and also, it may be flexible. All video processing devices include windows, touch screens, and displays. Accordingly, the windows mean the windows of all video processing devices such as mobile devices, information processing terminals, televisions, and so on. In the same manner as above, the touch screens and the displays mean the touch screens and the displays of all video processing devices.

According to the present invention, the detachable layer has adhesion strength, desirably, in the range of 0.1 to 500 gf/25mm, and more desirably, in the range of 1 to 100 gf/25mm. In this case, since the adhesion strength of the detachable layer adopted in the present invention is smaller than the general adhesion strength of 1,500 gf/25mm the conventional adhesion layer has, the detachable layer is distinguished from the adhesion layer in the conventional practices. In this case, the detachable layer adopted in the present invention is an adhesive that is optically transparent and cured by means of heat treatment or ultraviolet rays UV. If the adhesive is subjected to the heat treatment or UV treatment at a given temperature for a given period of time, it is cured to a semisolid state. The adhesion can be easily carried out in a manual operation by a consumer, while generating no air bubbles.

The detachable layer is diversely adopted within the technical scope of the present invention, and desirably, the detachable layer is any one selected from an adhesive made by mixing thermosetting resin or ultraviolet curing resin as acrylic polymer, silicone polymer, or urethane polymer with a cross-linking agent, a mixture thereof, and a copolymer thereof. In some cases, the detachable layer is mixed with functional materials like silica gels, nano-particles, and anti-static agents, thereby improving the physical properties thereof. Furthermore, quantum dots are added to the detachable layer, thereby improving the optical characteristics of the detachable layer.

The window structure is a window structure what is detachably attached to the display. Embodiments of the present invention provide display devices that are applied to the window structure, but they may be provided with other window structures within the spirit and scope of the present invention. According to the present invention, the window structure is separately manufactured and detachably attached to one of the attachment target devices. At this time, the attachment of the window structure is conducted in a manual operation.

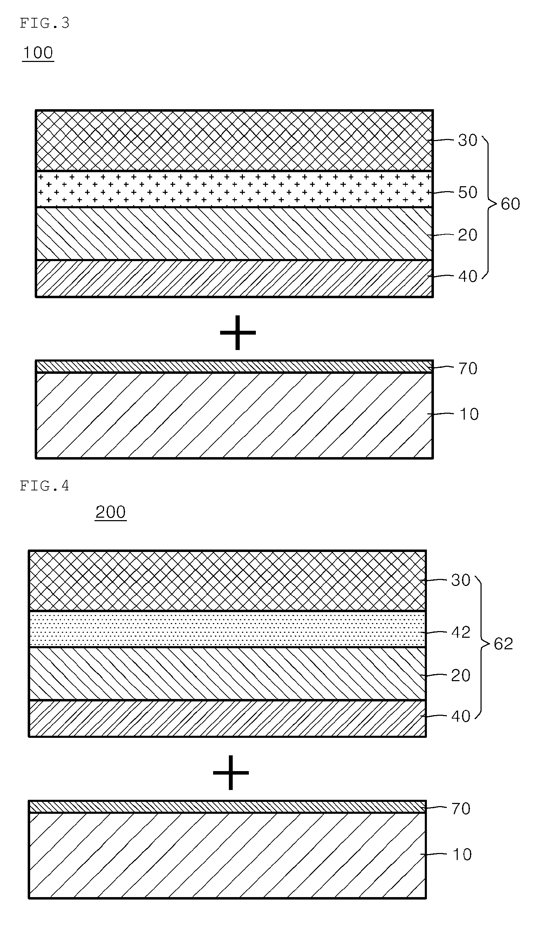

FIG.3 is a schematic sectional view showing a display device 100 of the present invention, wherein the display device 100 has a first window structure 60 detachably attached thereto. Of course, FIG.3 is not an accurate sectional view showing the display device 100 of the present invention, and for the brevity of the description, further, the display device 100 may have components not indicated on the sectional view thereof.

As shown in FIG.3, the display device 100 of the present invention includes a display 10, a first detachable layer 40, a touch screen 20, an adhesive layer 50, and a window 30 sequentially laminated on one another. At this time, the window 20, the adhesive layer 50, the touch screen 20 and the first detachable layer 40 constitute the first window structure 60. The display 10 is selected from a liquid crystal display LCD, an organic light-emitting diode OLED, and an electronic paper display EPD, and utilizes quantum dots. The adhesive layer 50 is selected from, for example, a thermosetting adhesive and an ultraviolet curing adhesive. However, the adhesive layer 50 is not limited particularly, and may make use of OCA (optical clear adhesive). The touch screen 20 is made by forming a conductive pattern(s) on one side or both sides of an insulating layer made of a metal oxide or plastic. The insulation layer is generally made of the metal oxide such as ITO, ATO, ZnO, Cu, conductive polymer and silver nanowire.

If the window 30 is made of a transparent material, it is not limited particularly. For example, the window 30 is any one selected from a glass substrate and a plastic substrate. In more detail, the glass substrate is a tempered glass substrate, and the plastic substrate is any one or more selected from the group consisting of PET (polyethylene terephthalate), PEN (polyethylene naphthalate), PES (polyether sulfone), PI (polyimide), PAR (polyarylate), PC (polycarbonate), PMMA (polymethyl methacrylate), and COC (cycloolefin copolymer). The window 20 may have a lamination structure in which the tempered glass substrate and the plastic substrate are multi-layered on each other.

The window 30 has a print layer, which is transparent or provides a variety of functions. The print layer includes any one or more coating layers selected from transparent, semi-transparent, and colored coating layers. The print layer is formed by means of silk printing, inkjet printing using UV, inkjet printing using thermosetting, or transferring. Further, the window 30 is coated thereon with a functional coating layer such as an anti-fingerprint coating layer, an anti-bacteria coating layer, a scratch prevention coating layer and the like. The functional coating layer is formed by means of wet coating through the application of a liquid thereto and dry coating through vacuum deposition. Further, various properties such as shielding, reflection prevention, blue light shielding, electromagnetic shielding, and privacy are applied to the underside of the glass substrate or the plastic substrate of the window 30. Furthermore, the window 20 has openings formed to expose buttons, a camera, a speaker, and so on to the outside.

According to the present invention, the first window structure 60 is detachably attached to the display 10 by means of the first detachable layer 40. The first detachable layer 40 is detachably attached to the display 10, while removing a release film therefrom. Like this, the first detachable layer 40 is detachably attached to the display 10. If the first detachable layer 40 is made of a transparent material, it is not limited particularly. The first detachable layer 40 is any one selected from an adhesive made by mixing thermosetting resin or ultraviolet curing resin as acrylic polymer, silicone polymer, or urethane polymer with a cross-linking agent, a mixture thereof, and a copolymer thereof. The first detachable layer 40 is a single layer or multiple layers having different materials from each other. The multiple layers are made of appropriate materials in accordance with the use environments of the first detachable layer 40. The first detachable layer 40 has a given thickness desirably in the range of 10 to 200 µm so that it can be attached well to the touch screen 20. Of course, it is obvious that the thickness of the first detachable layer 40 can be obtained through repeated tests by the person skilled in the art.

So as to allow the first window structure 40 to be easily detachable from the display 10, on the other hand, an adhesion reduction layer 70 is formed on top of the display 10. The adhesion reduction layer 70 serves to increase a contact angle and thus to improve a slip property thereof. Through the formation of the adhesion reduction layer 70, the first window structure 60 is easily detachable from the display 10. The adhesion reduction layer 70 is a coating material made of a fluorocarbon resin or silicone resin. The adhesion reduction layer 70 may be formed with a vacuum deposition layer made of titania TiO₂ or silica SiO₂ and a fluorocarbon resin or silicone resin coated on the vacuum deposition layer. At this time, the fluorocarbon resin or silicone resin is formed by means of ECC (Easy Cleaning Coating). Through the formation of the adhesion reduction layer 70, the generation of air bubbles can be more effectively suppressed upon the attachment of the window 30 to the display 10. Through the formation of the adhesion reduction layer 70, further, the first window structure 60 can be easily detachably attached to the display 10 by a consumer, without having any separate tool.

If the detachable layer 40 has the adhesion strength in the range of 0.1 to 500 gf/25mm, it has self adhesion strength. Through the self adhesion strength, only if the detachable layer 40 is placed just on the display 10, it is attached thereto by itself, without having any air bubbles. On the other hand, if the adhesion reduction layer 70 is applied to the display 10, the first detachable layer 40 has more improved self adhesion strength than that having no adhesion reduction layer 16.

According to the present invention, the adhesion strength of the first detachable layer 40 is varied in accordance with the existence of the adhesion reduction layer 70. If there is the adhesion reduction layer 70, the first detachable layer 40 has the adhesion strength in the range of about 0.5 to 500 gf/25mm, but if there is no adhesion reduction layer 70, the first detachable layer 40 has the adhesion strength in the range of 0.1 to 200 gf/25mm. Under the condition where the first detachable layer 40 have the same materials and thicknesses as each other, if the adhesion reduction layer 70 is formed on the touch screen 20 to which any one of the first detachable layer 40 is attached, the first window structure 60 is more easily attached to the display 10, without having air bubbles, when compared with that of the display device having no adhesion reduction layer 70. Through the formation of the adhesion reduction layer 70, also, the first window structure 60 is easily detachable from the display 10.

According to the present invention, the first window structure 60 is separately manufactured and thus protected by a release film. The release film is removed from the first window structure 60 so as to attach the first window structure 60 to the display 10. If the release film is removed, the first detachable layer 40 is exposed to the outside. If the first window structure 60 in which the first detachable layer 40 is exposed to the outside is attached to the display 10 in a manual operation, the window 30 is mounted on the display 10. Accordingly, the precise attaching operation carried out in the conventional practices is not required anymore. Further, if the first window structure 60 is broken or exchanged with new one, it is separated from the display 10 in a manual operation, and next, a new first window structure 60 is attached thereto.

FIG.4 is a schematic sectional view showing a display device of the present invention, wherein the display device 200 has a second window structure 62 detachably attached thereto. Of course, FIG.4 is not an accurate sectional view showing the display device 200 of the present invention, and for the brevity of the description, further, the display device 200 may have components not indicated on the sectional view thereof. At this time, the display device 200 is the same as the display device 100 except that the adhesive layer 50 is replaced with a second detachable layer 42. Hereinafter, the repeated explanation on the corresponding parts in the above-mentioned description will be avoided or briefly given.

As shown in FIG.4, the display device 200 according of the present invention includes a display 10, a first detachable layer 40, a touch screen 20, a second detachable layer 42, and a window 30 sequentially laminated on one another. At this time, the window 30, the second detachable layer 42, the touch screen 20 and the first detachable layer 40 constitute the second window structure 62. In this case, the first detachable layer 40 and the second detachable layer 42 have the same functions as each other, but they are located on different positions from each other, so that they have different reference numerals. The second window structure 62 is detachably attached to the display 10 by means of the first detachable layer 40. The first detachable layer 40 is detachably attached to the display 10, while removing a release film therefrom. Further, the second window structure 62 is detachably attached to the touch screen 20 by means of the second detachable layer 42. That is, the second window structure 62 have the first detachable layer 40 and the second detachable layer 42 detachably attached correspondingly to the display 10 and the touch screen 20.

If the first detachable layer 40 and the second detachable layer 42 are made of a transparent material, they are not limited particularly. Each detachable layer is any one selected from an adhesive made by mixing thermosetting resin or ultraviolet curing resin as acrylic polymer, silicone polymer, or urethane polymer with a cross-linking agent, a mixture thereof, and a copolymer thereof. Each of the first detachable layer 40 and the second detachable layer 42 is a single layer or multiple layers having different materials from each other. The multiple layers are made of appropriate materials in accordance with the use environments of the first detachable layer 40 and the second detachable layer 42. The first detachable layer 40 and the second detachable layer 42 have a given thickness desirably in the range of 10 to 200 µm so that they can be attached well to the display 10 and the touch screen 20. Of course, it is obvious that their thickness can be obtained through repeated tests by the person skilled in the art.

According to the present invention, even if not shown, additional components are disposed on any one or both positions between the window 30 and the second detachable layer 42 of the second window structure 62 and between the touch screen 20 and the first detachable layer 40 thereof so as to apply a variety of functions thereto. The additional components include an optically clear adhesive layer, an anti-scattering layer and so on. If necessary, a print layer and a functional coating layer are formed appropriately. For example, an optically clear adhesive layer having a print layer is formed on the touch screen 20, and a transparent synthetic resin film (for example, PET film) is attached to the optically clear adhesive layer. After that, the first detachable layer 40 is formed on the transparent synthetic resin film. The additional components are well known to the art, and a detailed explanation on them will be avoided herein.

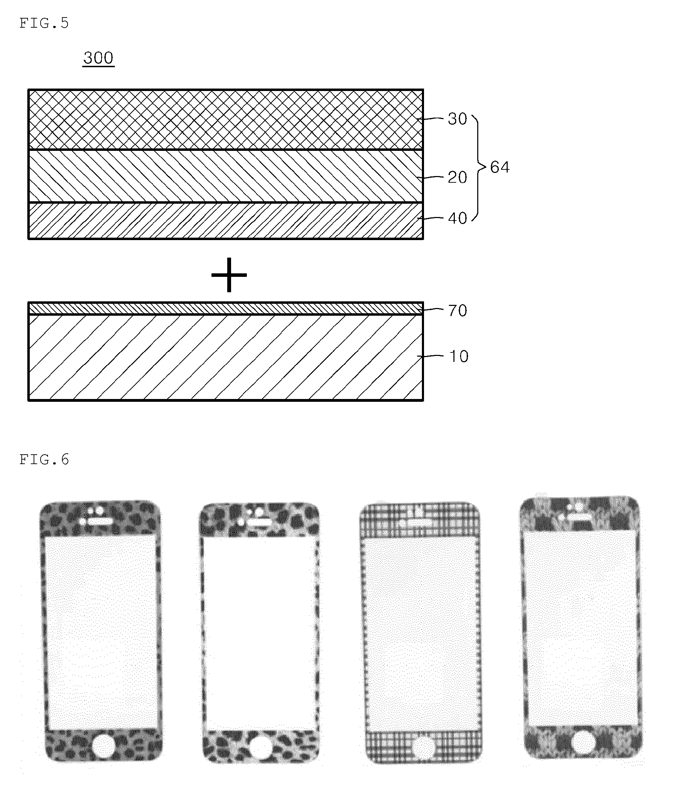

FIG.5 is a schematic sectional view showing a display device 300 of the present invention, wherein the display device 300 has a third window structure 64 detachably attached thereto. Of course, FIG.5 is not an accurate sectional view showing the display device 300 of the present invention, and for the brevity of the description, further, the display device 300 may have components not indicated on the sectional view thereof. At this time, the display device 300 is the same as the display device 100 except that there is no adhesive layer 50. Hereinafter, the repeated explanation on the corresponding parts in the above-mentioned description will be avoided or briefly given. At this time, the third window structure 64 also includes the additional components provided in the first window structure 60.

As shown in FIG.5, the display device 300 of the present invention includes a display 10, a first detachable layer 40, a touch screen 20, and a window 30 sequentially laminated on one another. At this time, the window 30, the touch screen 20 and the first detachable layer 40 constitute the third window structure 64. In this case, the touch screen 20 is a conductive pattern formed directly on the underside of the window 30. That is, the touch screen 20 is formed with the conductive pattern formed on the window 30. If the first detachable layer 40 is made of a transparent material, it is not limited particularly. The first detachable layer 40 is any one selected from an adhesive made by mixing thermosetting resin or ultraviolet curing resin as acrylic polymer, silicone polymer, or urethane polymer with a cross-linking agent, a mixture thereof, and a copolymer thereof. The first detachable layer 40 is a single layer or multiple layers having different materials from each other. The multiple layers are made of appropriate materials in accordance with the use environments of the first detachable layer 40. The first detachable layer 40 has a given thickness desirably in the range of 10 to 200 µm so that it can be attached well to the touch screen 20. Of course, it is obvious that the thickness of the first detachable layer 40 can be obtained through repeated tests by the person skilled in the art.

In the same manner as the display device 100 of the present invention, the display device 300 of the present invention also includes the adhesion reduction layer 70. The materials and functions of the adhesion reduction layer 70 are already explained when the display device 100 is described. According to the present invention, the adhesion strength of the first detachable layer 40 is varied in accordance with the existence of the adhesion reduction layer 70. If there is the adhesion reduction layer 70, the first detachable layer 40 has the adhesion strength in the range of about 0.5 to 500 gf/25mm, but if there is no adhesion reduction layer 70, the first detachable layer 40 has the adhesion strength in the range of 0.1 to 200 gf/25mm. Under the condition where the first detachable layers 40 have the same materials and thicknesses as each other, if the adhesion reduction layer 70 is formed on the touch screen 20 to which any one of the first detachable layers 40 is attached, the third window structure 64 is more easily attached to the display 10, without having air bubbles, when compared with that of the display device having no adhesion reduction layer 70. Through the formation of the adhesion reduction layer 70, also, the third window structure 64 is easily detachable from the display 10.

If the first detachable layer 40 has the adhesion strength in the range of 0.1 to 500 gf/25mm, it has self adhesion strength. Through the self adhesion strength, only if the detachable layer 40 is placed just on the display 10, it is attached thereto by itself, without having any air bubbles. On the other hand, if the adhesion reduction layer 70 is applied to the display 10, the first detachable layer 40 has more improved self adhesion strength than that having no adhesion reduction layer 70.

If each of the first to third window structures 60, 62 and 64 is applied to the display device according to the present invention, the electrical connection parts are formed on given areas of the display 10 and the touch screen 20 in such a manner as to face each other. So as to form the electrical connection parts, a portion of the first detachable layer 40 formed on the touch screen 20 is removed. If each of the first to third window structures 60, 62 and 64 is attached to the touch screen 20 or the display 10, the electrical connection parts are connected to each other, thereby conducting the electrical connection for each of the display devices 100, 200 and 300.

If the window structure of each display device according to the present invention is broken, a new window structure is selected and just attached to the touch screen or display, thereby simply finishing the exchanging operation thereof. In more detail, the broken window structure is separated from the touch screen or display, and a new window structure is attached thereto. The exchanging operation of the window structure is carried out directly by a consumer, and the exchanging time is very short. Further, only the window structure is removed from the touch screen or display, which makes the display device easily recycled. Furthermore, the window structure is detachably attached to the touch screen or display by means of adhesion, so that it can be easily attached thereto, without having any air bubbles. Only the parts of the display device excepting the window structure are made by a manufacturing company, and also, no adhesion process is required, so that the manufacturing process can be simple. Especially, if the adhesion reduction layer exists, it is easier to attach the window structure to the touch screen or display, without having any air bubbles, and through the formation of the adhesion reduction layer, further, the wind structure is easily separable from the touch screen or display.

FIG.6 is a schematic view showing the outer appearances of the display devices according to the embodiments of the present invention. For example, the display devices are mobile devices, and of course, they may be applied to other devices within the technical scope of the present invention.

As shown in FIG.6, the outer appearances of the display devices according to the present invention can be designed diversely. That is, the display devices according to the present invention can be designed with good appearances and various colors and patterns. After the original window structure is separated from the display device, in this case, if a new window structure is attached to the display device, the outer appearance of the window structure can be changed to that with a consumer's desired design. So as to change the design of the window structure in the conventional practices, the adhesion of the window structure is removed, and a new window structure is again bonded to the display. In case of the display device according to the present invention, by the way, the existing window structure is removed from the display, and a new window structure is detachably attached thereto, so that the design of the display device can be changed simply. Unlike the window structure in the conventional practices, the window structure in the present invention is not a necessary item fixed to the display device, but a consumable item detachably attached to the display device if needed. Through the variety of designs, the after services for the respective designs, which are conducted one by one by the manufacturing company of the display device, are not needed anymore.

As described above, the display device and the manufacturing method according to the present invention are configured wherein the window structure including the detachable layer having the adhesion strength in the range of 0.1 to 500 gf/25mm is detachably attached to the display device, so that when the window structure is damaged, it can be easily exchanged with new one, and also, the separation of the window structure is simple. According to the present invention, further, the detachable layer has self adhesion strength, so that it can be easily detachably attached to the display device, without having any air bubbles. Accordingly, the display device according to the present invention is manufactured with simple processes, low manufacturing cost and various designs, thereby satisfying the needs of the consumer. Furthermore, the window structure is easily exchanged with new one by means of the detachment and attachment thereof, so that it can be not a necessary item fixed to the display device, but a consumable item detachably attached to the display device.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention. For example, separate means like grooves are formed on an injection molded body of the display device according to the present invention so as to allow the window structure to be more easily detachably attached to the display device.

## Claims

1. A display device comprising:
a window structure having a detachable layer formed on the front surface of a touch screen formed unitarily with a window, the detachable layer having the adhesion strength in the range of 0.1 to 500 gf/25mm; and
a display from which the detachable layer of the window structure is entirely detachable,
wherein the display has an adhesion reduction layer formed thereon to reduce the adhesion force to the detachable layer formed on the front surface of the touch screen.

2. The display device according to claim 1, wherein the window is any one selected from a glass substrate and a plastic substrate.

3. The display device according to claim 1, wherein the window is any one selected from a tempered glass substrate and a plastic substrate having any one or more selected from the group consisting of PET (polyethylene terephthalate), PEN (polyethylene naphthalate), PES (polyether sulfone), PI (polyimide), PAR (polyarylate), PC (polycarbonate), PMMA (polymethyl methacrylate), and COC (cycloolefin copolymer).

4. The display device according to claim 1, wherein the detachable layer is any one selected from an adhesive made by mixing thermosetting resin or ultraviolet curing resin as acrylic polymer, silicone polymer, or urethane polymer with a cross-linking agent, a mixture thereof, and a copolymer thereof.

5. The display device according to claim 1, wherein the detachable layer is a single layer or multiple layers having different materials from each other.

6. The display device according to claim 1, wherein the window structure is designed diversely in shape, color and pattern.

7. The display device according to claim 1, wherein the adhesion reduction layer is coated with a fluorocarbon resin or silicone resin.

8. A method for manufacturing a display device, the method comprising the steps of:
removing a release film from a window structure having a detachable layer formed on the front surface of a touch screen formed unitarily with a window, the detachable layer having the adhesion strength in the range of 0.1 to 500 gf/25mm, and exposing the detachable layer to the outside; and
attaching the exposed detachable layer to a display, wherein the display has an adhesion reduction layer formed thereon to reduce the adhesion force to the detachable layer formed on the front surface of the touch screen.

9. The method according to claim 8, wherein further comprising the step of separating a damaged window structure attached to the display, before preparing the window structure.

10. The method according to claim 8, wherein the window structure is attached in a manual operation.

11. The method according to claim 25, wherein the window structure is attached with no air bubbles.
